# EUROPEAN PATENT APPLICATION

(11) **EP 4 606 833 A1**
(43) Date of publication of application: **27.08.2025**
(21) Application number: 24315052.1
(22) Date of filing: 21.02.2024
(51) Int. Cl.: C08G 18/42, C08G 18/72, C08G 18/76

(54) **BIO-AND RECYCLING-BASED POLYURETHANE COMPOSITION AND USE THEREOF IN THE PREPARATION OF POLYURETHANE-BASED ARTICLES**

(71) Applicant: Polyola SAS, 64200 Biarritz (FR)
(72) Inventor: GUNTSCHNIG, Daniel, Munich (DE); SCHÖNDIENST, Jakob Aristide, Berlin (DE)
(74) Representative: Wallinger Ricker Schlotter Tostmann

(57) **Abstract**

The present invention relates to a method for preparing a polyurethan-based article, the method comprising (I) providing a polyurethan system comprising at least one polyol component (A) and at least one isocyanate component (8) to a forming mold; (II) optionally closing the forming mold and optionally applying a pressure in the forming mold; and (III) expanding the polyurethan system in the forming mold; wherein the polyol component is bio-based and/or recycling-based; as well as to the article prepared by the method and the polyurethane system used in the method according to the invention.

## Description

### BACKGROUND OF THE INVENTION

Two component polyurethan systems are well-established materials for the preparation of soft foam articles, such as for example shoe soles, shoe tongues, cushion or padding material; or for the preparation of hard foam articles as for example insulations.

The two main components a polyurethan system comprises are a polyol and an isocyanate component forming a polyurethane entity when reacted.

Nearly any polymeric structure bearing more than one hydroxyl group per repeating unit may be used as polyol for the formation of the final polyurethan. Variation of the polymeric backbone allows to influence physical and chemical properties of the final polyurethan.

In WO99/33893 such a classical polyurethan system is disclosed for the preparation of shoe soles from a mixture of a polyether-polyol and another polymer-polyol. Depending on the polymer chosen as second polyol, the mechanical and physical properties of the polyurethan obtained vary in density and hardness.

Accordingly, polyurethanes depict interesting materials for a broad range of articles. Advantageously, said articles can be perfectly adjusted to match the requirements given by the respective application in terms flexibility, hardness, density and shape among others.

In WO2022/011580 a blend of a polyester-polyol and a polyether-polyol is used as basis for the polyurethan system disclosed having high physical strength, excellent dynamic properties and a superior appearance. Thereby, the properties of the polyester-polyol and the polyether-polyol both contribute with their own beneficial properties to the final polyurethane: the polyethers provide microbial attack resistance and the polyesters contribute with improved toughness and wear-resistance.

However, similar to many plastics, polyurethanes often possess a poor environmental footprint, which is the result of e.g. the non-existent biodegradability. Although methods for recycling exist, the resulting compounds, i.e. polyols, often may not simply be used as starting materials again caused by the product mixture resulting from the recycling reaction. These difficulties may be mainly traced back to a very high hydroxyl value (OH-value), which heavily impacts the resulting properties of a polyurethan formed. The higher the OH-value of a polyol, the more rigid the resulting polyurethane will be. Accordingly, to achieve flexible materials as for example shoes, soles, tongues, paddings or cushions, the application of recycled polyols is very limited.

EP 0 822 228 A2 shows a recycling process using a glycolysis reaction, wherein a polyol is obtained having a hydroxyl value of 300 to 1000 mg KOH/g. This OH-value exceeds the desired ranges of the OH-value for flexible products by magnitudes.

Therefore, known polyurethane systems do not tolerate high proportions of recycled polyols in the pre-mixture of the polymer due to the high OH values. Accordingly, the remaining proportions in polyurethan systems is virgin polyol and thus, contributes to the poor environmental footprint.

Further, high OH-values lead to change in the well-known reaction thermodynamics of the polyurethane formation and thus, lead to uncontrolled foaming behavior and to inferior properties of the resulting materials.

According to the continuously rising interest in more sustainable and green technologies, a need in the industry exists for processes addressing the above-mentioned drawbacks of recycled polyols to increase the amount of polyols which may be used again in polyurethan technology and thus, which may be truly recycled.

### OBJECTS OF THE INVENTION

It is therefore an object of the present invention to provide a polyurethane composition overcoming the described disadvantages of known compositions comprising bio-based and/or recycling-based polyols.

### SUMMARY OF THE INVENTION

The inventors discovered a polyurethane system which can be made of a high proportion of bio-based and/or recycling-based polyols but overcome the before described disadvantages deriving from such high proportions.

This allows a more sustainable production of polyurethanes and thus, of articles made therefrom.

One particular advantage is that the polyurethane articles according to the present invention may again be recycled and the therefrom obtained raw materials may be used for the production of polyurethane compositions according to the inventions again. This allows the materials used in the present process to be truly recycled and thus, further increases the environmental footprint of the present invention.

Accordingly, the object is solved by a polyurethane comprising at least components (A) and (B), wherein component (A) is at least one polyol composition comprising component (A1) which is at least one first polyol; component (A2) which is at least one second polyol; and component (B) is at least one isocyanate; wherein the at least one first polyol is a bio-based and/or recycling-based polyol.

Further, in the polyurethan composition according to the invention, component (A1) is obtained from recycled acidolyses polyurethan (PU) and/or recycled glycolysis polyethylene terephthalate (PET).

Further, in the polyurethan composition according to the invention, component (A) possesses an average OH-value in the range of from 10 mg KOH/g to 500 mg KOH/g.

Additionally, in the polyurethan composition according to the invention, component (A) comprises at least one first polyol (A1) in an amount of from 10 to 99 wt%; at least one second polyol (A2) in an amount of from 1 to 90 wt%; and wherein the weight percent are based on the total weight of component (A).

Further, in the polyurethan composition according to the invention, the polyurethan composition comprises component (A) in an amount of from 20 wt% to 70 wt% and component (B) in an amount of from 30 wt% to 80 wt%, wherein the weight percent are based on the total weight of the polyurethan composition.

In addition, in the polyurethan composition according to the invention, component (B) comprises or consists of at least one bio-circular isocyanate.

Further, in the polyurethan composition according to the invention, the polyurethan composition further comprises one or more additives selected from the group consisting of stabilizers, catalysts, blowing agents, pigments, crosslinkers and chain extenders.

The invention further relates to a method for preparing a polyurethan-based article, the method comprising: providing at least one component (A) and at least one component (B) to a forming mold, thus forming a polyurethan composition as claimed in at least one of the preceding claims; optionally closing the forming mold and optionally applying a pressure in the forming mold; and expanding the polyurethan composition in the forming mold.

Further, in the method according to the invention, in step (III) an initiation temperature is applied via the forming mold; wherein said initiation temperature is below 45 °C.

In addition, in the method according to the invention, the pressure applied is in the range of from 0 to 70 bar, preferably from 3 to 55 bar.

Additionally, in the method according to the invention, the cream time is in the range of from 2 to 30 s; and/or the demolding time is in the range of from 1 to 10 min.

Further, in the method according to the invention, articles, production residues, rejects and/or any remainders from the polyurethan system may be recycled and re-used in the method.

In addition, the invention relates to a polyurethan-based article comprising the polyurethan composition according to the invention or prepared by the method according to the invention.

Further, the article according to the invention can be a shoe, shoe sole, a padding material, a cushioning material. an insulation or structural panels.

### DETAILED DESCRIPTION OF THE INVENTION

The present invention relates to a polyurethan composition comprising the components (A) and (B):
(A) at least one polyol component comprising:
   component (A1) which is at least one first polyol;
   component (A2) which is at least one second polyol; and
(B) at least one isocyanate
wherein the at least one first polyol is a bio-based and/or recycling-based polyol.

The term "polyurethane composition" refers to any pre-prepared form, in which all reactants necessary for the formation of the polyurethane are ready to be provided to a reaction vessel as for example a forming mold. This includes readily mixed "pre-mixtures" comprising any necessary components as well as "multi-component compositions" in which the necessary components are kept in two or more separate containers to be mixed only directly before the reaction.

The term "polyol component" refers to the commonly known definition in the prior art, i.e. to a compound having any polymeric backbone bearing one or more free hydroxyl substituents per repeating unit. The polymeric backbone may be derived from a broad range of polymers as known in the art. Non-limiting examples are polyesters polyols, polyether polyols, polycarbonate polyols, polycaprolactone polyols, polybutadiene polyols, and polysulfide polyols.

Further, it is possible that the polyols are "bio-based" polyols comprising or consisting of polyols derived from natural sources, such as but not-limited to vegetable oils.

It is further possible that the polyols are "recycling-based" polyols comprising or consisting of polyols recycled from any sources, such as but not limited to being recycled from polyethylene terephthalate (PET), from polyurethanes (PU) or from hydroxyfunctional ketal acids, esters or amides, like e.g. disclosed in EP 3 212 687 B1; or obtained by any method for recycling plastics yielding polyols known in the prior art such as glycolysis, acidolysis, aminolysis or hydrolysis.

The term "isocyanate component" refers to the commonly known definition in the prior art as well, i.e. to a compound having two or more free isocyanate substituents. Further, also polymeric compounds are included in the term "isocyanate compound", i.e. compounds which comprise a polymeric backbone and one or more isocyanates per repeating unit. Non-limiting examples include 1,6-hexamethylene diisocyanate (HDI), isophorone diisocyanate (IPDI), 4,4'-diisocyanato dicyclohexylmethane (H₁₂MDI), 1,1'-methylene bis(isocyanatobenzene) (MDI), tetramethylxylylene diisocyanate (TMXDI).

It is possible that the polyurethane composition according to the invention comprises component (A) in an amount of at least 20 wt%, or at least 30 wt%, or at least 35 wt%, or at least 40 wt%, or at most 70 wt%, or at most 60 wt%, or at most 55 wt%, or at most 50 wt%, or in the range of from 20 wt% to 70 wt%, or of from 30 wt% to 60 wt%, or of from 40 wt% to 55 wt%, or of from 30 wt% to 50 wt%, wherein the weight percent are based on the total weight of components (A) and (B).

Component (A1) of the polyurethane composition according to the invention is at least one first polyol and is a bio-based and/or recycling-based polyol, wherein the terms "bio-based" and "recycling-based" are defined as before.

Therefore, it is possible that the polyol component (A1) comprises or consists of polyols derived from natural sources, such as but not-limited to vegetable oils.

It is further possible that the polyol component (A1) is obtained for example but not limited to recycled polyethylene terephthalate (PET), polyurethanes (PU) or a combination thereof; or is obtained by any method for recycling plastics yielding polyols known in the prior art such as glycolysis, acidolysis, aminolysis or hydrolysis, or a combination thereof.

In addition, it is possible that the component (A1) is obtained from the acidolysis of polyurethane.

It is also possible that the component (A1) is obtained from the glycolysis of polyethylene terephthalate (PET) or polyurethane (PU).

Typically, polyols derived from acidolysis possess lower hydroxyl values ("OH-values") in the range of from 30 mg KOH/g to 300 mg KOH/g while polyols derived from glycolysis typically possess rather high OH-values in the range of from 150 mg KOH/g to 400 mg KOH/g. Accordingly, the application of such recycled polyols was very restricted in the prior art due to the limitation by the requirement of low OH-values, as for example for soft foam applications. The OH-value of polyol can be determined using ASTM E1899-16

In general, the average OH-value of the polyol component is one important parameter to preset physical properties, such as rigidity of the resulting polyurethane foam. Depending on the desired field of application, the average OH-value of the polyol component can vary in a broad range of OH-values, such as for example but not limited to below 150 mg KOH/g for soft foam applications or above 150 mg KOH/g for hard foam applications.

It is further possible that the polyurethane composition according to the invention comprises component (A1) in an amount of from at least 10 wt%, or at least 20 wt%, or at least 25 wt%, or at least 30 wt%, or at least 35 wt%, or at least 40 wt%, or at most 99 wt%, or at most 98 wt%, or at most 96 wt% or at most 94 wt%, or at most 92 wt%, or in the range of from 10 wt% to 99 wt%, or of from 20 wt% to 98 wt%, or of from 25 wt% to 96 wt%, or of from 25 wt% to 94 wt%, or of from 30 wt% to 92 wt%, or of from 40 wt% to 92 wt%, wherein the weight percent are based on the total weight of component (A) in the polyurethane composition.

In addition, it is possible that the hydroxyl value (OH-value) varies in broad boundaries depending on the recycled material, the method according to which the material was recycled and the polyurethane-based article to be produced from the polyurethane composition according to the invention. Accordingly, the OH-value of component (A1) can be at least 10 mg KOH/g, or at least 30 mg KOH/g, or at least 50 mg KOH/g, or at least 70 mg KOH/g, or at most 500 mg KOH/g, or at most 400 mg KOH/g, or at most 350 mg KOH/g, or at most 300 mg KOH/g, or can be in the range of from 10 mg KOH/g to 500 mg KOH/g, or from 50 mg KOH/g to 500 mg KOH/g, or of from 30 mg KOH/g to 400 mg KOH/g, or of from 50 mg KOH/g to 350 mg KOH/g, or of from 70 mg KOH/g to 300 mg KOH/g, or from 100 mg KOH/g to 400 mg KOH/g, or from 200 mg KOH/g to 100 mg KOH/g.

Component (A2) of the polyurethane composition according to the invention is at least one second polyol.

It is possible that component (A2) comprises or consists of at least one bio-based and/or recycling-based polyol, as defined above with reference to component (A1) which definitions apply here as well
It is further possible that component (A2) comprises or consists of a virgin polyol.

The term "virgin" refers to any compound stemming from non-recycling sources.

It is further possible that the polyurethane composition according to the invention comprises component (A2) in an amount of from at least 1 wt%, or at least 2 wt%, or at least 4 wt%, or at least 6 wt%, or at least 8 wt%, or at most 90 wt%, or at most 80 wt%, or at most 75 wt% or at most 70 wt%, or at most 65 wt%, or at most 60 wt%, or in the range of from 1 wt% to 90 wt%, or of from 2 wt% to 80 wt%, or of from 4 wt% to 75 wt%, or of from 4 wt% to 70 wt%, or of from 6 wt% to 65 wt%, or of from 8 wt% to 60 wt%, wherein the weight percent are based on the total weight of all polyols present in the polyurethane composition.

It is according to the invention that component (A1) is different from component (A2). In particular, component (A1) differs from component (A2) in the OH-value.

In addition, it is possible that the hydroxyl value (OH-value) of component (A2) varies in broad boundaries depending on the recycled material, the method according to which the material was recycled and the polyurethane-based article to be produced from the polyurethane composition according to the invention. Accordingly, the OH-value can be at least 5 mg KOH/g, or at least 10 mg KOH/g, or at least 20 mg KOH/g, or at least 30 mg KOH/g, or at most 150 mg KOH/g, or at most 100 mg KOH/g or at most 70 mg KOH/g, or at most 60 mg KOH/g, or at most 50 mg KOH/g, or can be in the range of from 5 mg KOH/g to 100 mg KOH/g, or from 5 mg KOH/g to less than 50 mg KOH/g, or of from 10 mg KOH/g to less than 70 mg KOH/g, or of from 20 mg KOH/g to less than 60 mg KOH/g, or of from 30 mg KOH/g to less than 50 mg KOH/g.

As indicated already, the average OH-value of component (A), i.e. the average of the OH-value calculated in relation to their respective mass proportion of component (A), impacts the properties of articles and materials produced from the polyurethane composition according to the invention.

Depending on the polyurethane-based article to be derived from the composition according to the invention, one crucial factor impacting the resulting articles is the hydroxyl value (OH-value) of the polyol component (A) of the polyurethane composition, , i.e. the average OH-value of the polyols (A1) plus (A2). The term "average" refers to a mass-related average of the OH-values of each individual polyol component. Accordingly, the average OH-value of the polyol composition (A) can be preset to a broad range of OH-values, such as for example but not limited to at least 150 mg KOH/g for soft foam applications or more than 150 mg KOH/g for hard foam applications. The OH-value of the polyol compositions can be determined using ASTM E1899-16. Non-limiting exemplary ranges for the OH-value of the polyol component (A) of the polyurethane composition according to the invention are at least 10 mg KOH/g, at least 20 mg KOH/g, at least 30 mg KOH/g, at least 40 mg KOH/g, or at least 50 mg KOH/g, or at most 500 mg KOH/g, or at most 450 mg KOH/g, or at most 400 mg KOH/g, or at most 350 mg KOH/g; or a OH-value in the range of from 10 mg KOH/g to 500 mg KOH/g, or of from 20 mg KOH/g to 450 mg KOH/g, or of from 30 mg KOH/g to 400 mg KOH/g, or of from 40 mg KOH/g to 350 mg KOH/g, or of from 50 mg KOH/g to 350 mg KOH/g.

It is possible that the average OH-value of the polyol component (A) in the polyurethan composition according to the invention for soft foam applications is at least 10 mg KOH/g, or at least 20 mg KOH/g, or at least 30 mg KOH/g, or at least 50 mg KOH/g, or at most150 mg KOH/g, or at most 120 mg KOH/g, or at most 100 mg KOH/g, or at most 70 mg KOH/g, or in the range of from 10 mg KOH/g to 150 mg KOH/g, or from 20 mg KOH/g to 120 mg KOH/g, or from 30 mg KOH/g to 100 mg KOH/g, or from 50 mg KOH/g to 70 mg KOH/g.

It is possible that the average OH-value of the polyol component in the polyurethane composition according to the invention for hard foam applications, is more than 150 mg KOH/g, or at least 175 mg KOH/g, or at least 200 mg KOH/g, or at least 225 mg KOH/g, or at most 500 mg KOH/g, or at most 450 mg KOH/g, or at most 400 mg KOH/g, or at most 350 mg KOH/g, or in the range of from 150 mg KOH/g to 500 mg KOH/g, or of from 175 mg KOH/g to 450 mg KOH/g, or of from 200 mg KOH/g to 400 mg KOH/g, or of from 225 mg KOH/g to 350 mg KOH/g.

Accordingly, it is possible to achieve an average OH-value of component (A) in the range of from 50 mg KOH/g to 150 mg KOH/g as desired for soft foam applications by using a mixture of recycling-based polyols having high OH-values, such as but not limited to 200 to 300 mg KOH/g, in an amount of up to 10 to 15 wt% as component (A1) in a mixture with polyols having a lower OH-value, such as but not limited to 20 mg KOH/g to 150 mg KOH/g in an amount of 85 to 90 wt% as component (A2), wherein the weight percent are based on the total weight of component (A). Polyols to be used as component (A2) can thereby be recycling-based polyols, such as but not limited to polyols obtained from acidolysis, or virgin polyols.

Further, it is possible to achieve an average OH-value of component (A) in the range of above 150 mg KOH/g to 500 mg KOH/g as desired for hard foam applications by using a mixture of recycling-based polyols having high OH-values, such as but not limited to 200 to 300 mg KOH/g, in an amount of 80 wt% to 99 wt% as component (A1), in a mixture with polyols having a lower OH-value, such as but not limited to 20 mg KOH/g to 150 mg KOH/g in an amount of 1 to 90 wt% as component (A2), wherein the weight percent are based on the total weight of component (A). Polyols to be used as component (A2) can thereby be recycling-based polyols, such as but not limited to polyols obtained from acidolysis, or virgin polyols.

It is possible that component (A) comprises or consists of any polyol or polyol mixture known in the prior art to be applied in polyurethane compositions, such as but not limited to pure recycled, or mixtures comprising recycled and/or virgin polyols.

It is further possible that component (A) comprises or consists of PolyolaRec A 420, PolyolaRec A 160.

In the polyurethane composition according to the invention, it is possible that component (A) comprises bio-based and/or recycling-based polyol (component (A1) plus component (A2)) in an amount of at least 10 wt%, or at least 15 wt%, or at least 17.5 wt%, or at least 20 wt%, or at least 22.5 wt%, or at least 25 wt%, or at least 27.5 wt%, or at least 30 wt%, or at least 32.5 wt%, or at least 35 wt%, or at least 37.5 wt%, or at least 40 wt% or up to 95wt%, or up to 90 wt%, or up to 85 wt%, or up to 80 wt%, based on the total weight of component (A).

It is further possible, that in the polyurethan composition according to the invention component (A) comprises only bio-based polyol (component (A1) plus component (A2)) in an amount of at least 10 wt%, or at least 15 wt%, or at least 17.5 wt%, or at least 20 wt%, or at least 22.5 wt%, or at least 25 wt%, or at least 27.5 wt%, or at least 30 wt%, or at least 32.5 wt%, or at least 35 wt%, or at least 37.5 wt%, or at least 40 wt% or up to 95wt%, or up to 90 wt%, or up to 85 wt%, or up to 80 wt%,, based on the total weight of component (A).

In the polyurethan composition according to the invention, it is possible that component (A) comprises only recycling-based polyol (component (A1) plus component (A2)) in an amount of at least 10 wt%, or at least 15 wt%, or at least 17.5 wt%, or at least 20 wt%, or at least 22.5 wt%, or at least 25 wt%, or at least 27.5 wt%, or at least 30 wt%, or at least 32.5 wt%, or at least 35 wt%, or at least 37.5 wt%, or at least 40 wt%, or up to 95wt%, or up to 90 wt%, or up to 85 wt%, or up to 80 wt%, based on the total weight of component (A).

Component (B) of the polyurethane composition according to the invention is at least one isocyanate.

It is possible that polyurethane composition according to the invention comprises component (B) in an amount of at least 30 wt%, or at least 40 wt%, or at least 45 wt%, or at least 50 wt%, or at least 55 wt%, or at least 60 wt%, or at most 80 wt%, or at most 75 wt%, or at most 70 wt%, or at most 65 wt%, or in the range of from 30 wt% to 80 wt%, or of from 40 wt% to 75 wt%, or of from 45 wt% to 70 wt%, or of from 50 wt% to 70 wt%, or of from 55 wt% to 65 wt%, or of from 50 wt% to 65 wt%, wherein the weight percent are based on the total weight of components (A) and (B).

It is further possible that that polyurethane composition according to the invention comprises component (A) in an amount of from 20 wt% to 70 wt% and component (B) in an amount of from 30 wt% to 80 wt%, wherein the weight percent are based on the total weight components (A) and (B).

It is possible that the at least one isocyanate of the polyurethane composition according to the invention is selected from the group consisting of 1,6-hexamethylene diisocyanate (HDI), isophorone diisocyanate (IPDI), diisocyanato dicyclohexylmethane H₁₂MDI), 1,1'-methylene bis(isocyanatobenzene) (MDI) and tetramethylxylylene diisocyanate (TMXDI). Suitable isocyanate for use as component (B) are for example but not limited to PolyolaRec B 420 from Polyola, Desmodur^{®} CQ 44 V 20L MB from Covestro or Elastopan^{®} S 7529/182 from BASF.

Further, it is possible that the at least one isocyanate of the polyurethane composition according to the invention comprises or consists of at least one bio-circular isocyanate.

The term "bio-circular" refers to materials obtained from renewable raw materials such as new biomass as well as biowaste and residual materials, which are mathematically allocated to the products using the mass balance approach. According to a common "gradle-to-gate"-calculation model, no CO₂ emissions are generated on balance during production from the cradle to the factory gate.

It is possible that component (B) comprises the at least one bio-circular isocyanate in an amount of at least 5 wt%, or at least 10 wt%, or at least 15 wt%, or atleast 25 wt%, or at most 30 wt%, or at most 40 wt%, or at most 50 wt %, or at most 60 wt%, or at most 70 wt%, or in the range of from 5 wt% to 70 wt%, or of from 10 wt% to 60 wt%, or of from 15 wt% to 50 wt%, or of from 20 wt% to 40 wt%, or of from 20 wt% to 30 wt% or of from 25 to 40 wt%, wherein the weight percent are based on the total amount of component (B) present in the polyurethane composition.

One further advantage of the present invention is that high proportions of recycled polyols and isocyanates can be used, i.e. the polyurethane composition according to the invention may include a total recycling content of up to 80 wt%, or up to 70 wt%, or up to 65%, or up to 60%, or up to 55wt%, or up to 50 wt%, or at least 10 wt%, or at least 20 wt%, or at least 25 wt%, or at least 30 wt% or at least 35 wt%, or at least 40 wt%, or in the range of from 10 wt% to 80 wt%, or from 20 wt% to 70 wt%, or from 25 wt% to 65 wt%, or from 30 wt% to 55 wt%, or from 40 wt% to 55 wt%, or from 40 wt% to 50 wt%, based on the total weight of the polyurethane composition.

It is also possible that component (B) is a virgin isocyanate.

It is further possible that the density of the isocyanate used in the polyurethane composition according to the invention varies within broad ranges depending on the polyurethan-based articles to be produced from the polyurethane composition. Accordingly, the density can be at least 0.8 g/cm³, or at least 0.9 g/cm³, or at least 1.0 g/cm³, or at least 1.1 g/cm³, or at most 2 g/cm³, or at most 1.8 g/cm³, or at most 1.6 g/cm³, or at most 1.5 g/cm³, or be in the range of from 0.8 g/cm³ to 2 g/cm³, or from 0.9 g/cm³ to 1.8 g/cm³, or from 1.0 g/cm³ to 1.6 g/cm³, or from 1.1 g/cm³ to 1.5 g/cm³.

It is also possible that the viscosity of isocyanate used in the polyurethane composition according to the invention varies within broad ranges depending on the polyurethan-based articles to be produced from the polyurethane composition. Accordingly, the density can be at least 250 mPa s, or at least 500 mPa·s, or at least 750 mPa·s, or at least 900 mPa·s, or at most 3000 mPa·s, or at most 2000 mPa·s, or at most 1500 mPa·s, or at most 1250 mPa·s, or at most 1100 mPa·s, or can be in the range of from 250 mPa·s to 3000 mPa·s, or can be in the range of from 250 mPa·s to 2000 mPa·s, or from 500 mPa·s to 1500 mPa·s, or from 750 mPa·s to 1250 mPa·s, or from 900 mPa·s to 1100 mPa·s, or can be 1000 mPa·s.

In addition, it is possible to apply isocyanates in the polyurethane composition according to the invention having NCO-values of at least 5%, or at least 7%, or at least 9%, or at least 11%, or at least 12%, or at most 40%, or at most 35%, or at most 30%, or at most 25%, or at most 22%, or in the range of from 5% to 40%, or from 7% to 35%, or from 9% to 30%, or from 11% to 25%, or from 12% to 22%. The term "NCO-value" refers to the amount of free isocyanate substituents in the isocyanate component. NCO-values can be determined according to ASTM D2572-19.

It is possible that the polyurethane composition according to the invention further comprises one or more additives selected from the group consisting of stabilizers, catalysts, blowing agents, like water, pigments, crosslinkers and chain extender.

It is possible that the polyurethane composition according to the invention comprises one or more stabilizers. In principle any stabilizer to be used within a polyurethane composition can be used in the present invention. Non-limiting examples are silicones, antioxidants, thermal stabilizers, UV-absorbers and light stabilizers; such as hindered amine light stabilizers (HALS), benzotriazolesm benzophenones, organic nickel compounds, silicone surfactants made from a silicone base and polyethers, mineral fillers, fibers, phosphates.

It is further possible that the stabilizer is present in an amount of at least 0.01 wt%, or at least 0.05 wt% or at least 0.1 wt%, or at least 0.2 wt%, or at most 7.5 wt%, or at most 5 wt %, or at most 4 wt%, or at most 3.5 wt%, or in the range of from 0.01 wt% to 7.5 wt%, or from 0.05 wt% to 5 wt%, or from 0.1 wt% to 4 wt%, or from 0.1 wt% to 3.5 wt%, or from 0.2 wt% to 3.5 wt%, based on the total weight of component (A).

It is possible that the polyurethane composition according to the invention comprises one or more catalysts. In principle any catalyst to be used within a polyurethane composition can be used in the present invention. Non-limiting examples is the group of amine-based catalysts such as triethylamine, imidazoles, C₁₋₈ diamines, piperazines, triazines or mixtures thereof.

It is further possible that the catalyst is present in an amount of at least 0.01 wt%, or at least 0.1 wt% or at least 0.25 wt%, or at least 0.5 wt%, or at most 7.5 wt%, or at most 5 wt %, or at most 3 wt%, or at most 2.5 wt%, or in the range of from 0.01 wt% to 7.5 wt%, or from 0.1 wt% to 5 wt%, or from 0.25 wt% to 3 wt%, or from 0.5 wt% to 2.5 wt%, or from 0.25 wt% to 3 wt%, based on the total weight of component (A).

It is possible that the polyurethane composition according to the invention comprises one or more blowing agents. In principle any blowing agent to be used within a polyurethane composition can be used in the present invention. Non-limiting examples are pentane, any kind of water, such as de-ionized, distilled or tap water.

It is further possible that the blowing agent is present in an amount of at least 0.1 wt%, or at least 0.2 wt%, or at least 0.3 wt%, or at least 0.5 wt%, or at most 7.5 wt%, or at most 5 wt%, or at most 4 wt%, or at most 3.5 wt%, or in the range of from 0.1 wt% to 7.5 wt%, or from 0.2 wt% to 5 wt%, or from 0.3 wt% to 4 wt%, or from 0.5 wt% to 3.5 wt%, or from 0.3 wt% to 3.5 wt%, based on the total weight of component (A).

In addition, it is possible that the polyurethane composition according to the invention comprises one or more pigments. In principle any pigment to be used within a polyurethane composition can be used in the present invention. Non-limiting examples are polyurethane pigments from West & Senior.

It is further possible that the pigment is present in an amount of at most 15 wt%, or at most 12.5 wt%, or at most 10 wt%, or at most 9 wt%, or at most 7.5 wt%, or at least 0.1 wt%, or at least 0.5 wt%, or at least 1 wt%, based on the total weight of component (A).

It is as well possible that the polyurethane composition according to the invention comprises one or more crosslinkers. In principle any crosslinker to be used within a polyurethane composition can be used in the present invention. Non-limiting examples are polyisocyanates, oligocyanates such as aromatic and/or aliphatic, cyclic and/or linear poly- or oligoisocyanates such as reaction products of formaldehyde with aniline and phosgene; or mixtures thereof.

It is further possible that the crosslinker is present in an amount of at least 0.01 wt%, or of at least 0.1 wt%, or of at least 0.5 wt%, or of at least 1 wt %, or of at most 10 wt%, or of at most 7.5 wt%, or of at most 5 wt%, or of at most 4 wt%, or from 0.01 wt% to 10 wt%, or from 0.1 to 7.5 wt%, or from 0.5 wt% to 5 wt%, or from 1 wt% to 4 wt%, based on the total weight of component (A).

It is further possible that the polyurethane composition according to the invention comprises one or more chain extender. In principle any chain extender to be used within a polyurethane composition can be used in the present invention. Non-limiting examples are any kind of aromatic and/or aliphatic diols such as C₂₋₈ diols, di-/tri-/tetraethyleneglycol, 1,4-(hydroxy-C₁₋₆)benzene; and/or mixtures thereof.

It is further possible that the chain extender is present in an amount of at least 0.1 wt%, or of at least 0.5 wt%, or of at least 1 wt%, or of at least 2 wt %, or of at most 15 wt%, or of at most 10 wt%, or of at most 7.5 wt%, or of at most 5 wt%, or from 0.1 wt% to 15 wt%, or from 0.5 to 10 wt%, or from 1 wt% to 7.5 wt%, or from 2 wt% to 5 wt%, based on the total weight of component (A).

In addition, it is possible that the polyurethane composition according to the invention comprises component (A) in an amount of from 20 wt% to 70 wt%, component (B) in an amount of from 30 wt% to 80 wt% based on the total weight of components (A) and (B); and a stabilizer in an amount of from 0.01 to 7.5 wt%, a catalyst in an amount of from 0.01 to 7.5 wt%, a blowing agent in an amount of from 0.1 to 7.5 wt% and a crosslinker in an amount of from 0.01 to 10 wt%, based on the total weight of component (A).

The invention further relates to a method for preparing a polyurethan-based article, the method comprising:
(I) Providing a polyurethan composition according to the invention comprising at least one polyol component (A), comprising component (A1) which is at least one first polyol, and component (A2) which is at least one second polyol and at least one isocyanate component (B) to a forming mold;
(II) Optionally closing the forming mold and optionally applying a pressure in the forming mold; and
(III) Expanding the polyurethan composition in the forming mold
wherein the polyol component (A1) is bio-based and/or recycling-based.

The explanations and definitions as provided above with regard to the polyurethan composition according to the invention apply here with regard to the method as well.

The term "polyurethane-based article" refers to any material for further processing or final item comprising or consisting of any form of a polyurethane.

In step (I) of the method according to the invention, the polyurethane composition comprising at least one polyol component (A) and at least one isocyanate component (B) is provided to a forming mold.

In step (I) of the method according to the invention, the polyurethane composition is provided into the forming mold.

It is possible that step (I) of the method according to the invention includes the provision of a readily mixed pre-mixture already comprising all components necessary.

The term "provision" refers to any technical means known to the prior art of adding the polyurethane composition to the forming mold, such as but not limited to pouring the polyurethane composition into the forming mold or injecting the polyurethane composition into the forming mold.

Further, it is possible to add further processing aids or additives before, during or after the provision of the polyurethane composition in step (I) of the method according to the invention, such as but non-limited to separating layers between the mold and the polyurethan composition or demolding agents.

In addition, it is possible that any compound or composition provided in step (I) of the method according to the invention, regardless of whether its physical form is liquid or solid, can be pre-tempered.

The term "pre-tempered" refers to any pre-heating or pre-cooling and depends on the polyurethane composition as well as on the desired reaction conditions and products.

It is possible that any compound or composition provided in step (I) of the method according to the invention is pre-tempered to the same or a different temperature.

It is further possible that step (I) of the method according to the invention includes a mixing step before, during or after the provision into the forming mold, in case a multi-component composition is used, i.e. a composition comprising two or more separately stored components or in case additional additives or processing aids are added to the forming mold before, after or during the provision of the polyurethane composition.

It is also possible that the forming mold is of any type known in the prior art and therefore may be open or closable; may or may not be pre-tempered.

It is possible that the temperature of the forming mold can be pre-set to at least 0 °C, or to at least 10 °C, or to at least 15 °C, or to at least 20 °C, or to at most 100 °C, or to at most 80 °C, or to at most, 60 °C or to at most 50 °C, or in a range of from 0 C to 100 °C, or from 10 °C to 80 °C, or from 15 °C to 60 °C, or from 20 °C to 50 °C, or the temperature can be room temperature.

It is further possible, that the polyol component (A) comprises or consists of (A1) at least one first polyol and (A2) at least one second polyol, wherein the at least one first polyol (A1) is a bio-based and/or recycling-based polyol.

In step (II) of the method according to the invention, the forming mold is optionally closed and a pressure is applied in the forming mold.

It is possible that the forming mold is closed to fulfill different requirements depending on the requirements of the respective method, such as but not limited to form the emerging foam into a distinct shape, to gas-tighten the forming mold, to avoid contamination during the forming process etc. The term "gas-tighten" thereby refers to any type of gas usually applied in industry, such as but not limited to air, nitrogen, carbondioxide and argon.

It is also possible that the forming mold does not need to be closed but is already closed during step (I) of the method according to the invention, for example but not limited to the case in which the polyurethane is injected into the forming mold.

It is further possible that the forming mold is not closed at all and thus, open during the formation of the foam.

In case the forming mold is closed gas-tight, applying of a pressure in wide ranges is possible and in principle only depends on the requirements of the applied polyurethane composition and the desired product. The term "applying a pressure" refers to applying increased as well as decreased pressure. The pressure may vary in broad boundaries of from 0 to 100 bar, or of from 0 to 80 bar, or of from 0 to 70 bar, or of from 3 to 60 bar, or of from 3 to 55 bar, or from 0 to 55 bar.

It is possible that the pressure during the complete method according to the invention is kept constant or that the pressure is varied, e.g. by increasing or decreasing the pressure during the method.

In step (III) of the method according to the invention, the polyurethane composition is expanded in the forming mold.

The term "expanding" includes reacting the polyol component and the isocyanate component in the presence of any added processing aid or additive and forming a foam of polyurethan being shaped in a pre-determined form to obtain the polyurethan-based article.

Further, it is possible that in the in the method according to the invention an initiation temperature is required to start the reaction for forming the polyurethane-based article. In general, lower initiation temperatures are advantageous due to a lower energy requirement to start the reaction and thus, a save of cost and environmental impact. According to the present invention, the initiation temperature was found to be sufficient below 50 °C, or below 45 °C, or below 40 °C, or below 35 °C, or below 30 °C.

It is possible that the initiation temperature is achieved by (pre-)tempering the forming mold to heat up the polyurethane composition after the provision step (I) of the method according to the invention. Accordingly, the temperature of the forming mold can be pre-tempered to at most 60 °C, or at most 55 °C, or at most 50 °C, or at most 45 °C, or at most 40 °C, or at most 35 °C.

Further, it is also possible that no initiation temperature is required to start the reaction due to a highly exothermic character of the reaction between component (A) and (B). This is advantageous since less energy is required to start the reaction is required. Further, the authors found that the polyurethane compositions according to the invention possess an improved foaming behavior leading to a reduced blowhole formation and thus, to less rejects and production residues, which is further advantageous.

In the method according to the invention it is possible that the polyurethane composition has a cream time of at least 2 s, or at least 3 s, or at least 4 s, or at least 5 s, or at least 6 s, or at most 30 s, or at most 25 s, or at most 20 s, or at most 15 s, or at most 12 s, or in the range of from 2 s to 30 s, or of from 3 s to 25 s, or of from 4 s to 20 s, or of from 5 s to 15 s, or of from 5 s to 12 s, or of from 6 s to 12 s.

It is also possible in the method according to the invention that the polyurethane composition has a demolding time of at least 1 min, or at least 1.5 min, or at least 2 min, or at least 2.5 min, or at least 3 min, or at most 10 min, or at most 7.5 min, or at most 6 min, or at most 5 min, or at most 4 min, or in the range of from 1 min to 10 min, or of from 1.5 min to 7.5 min, or of from 2 min to 6 min, or of from 2.5 min to 5 min, or of from 3 min to 4 min.

The terms "cream time" and "demolding time" refer to the meaning as known is the prior art of polyurethane compositions.

The method according to the invention is further advantageous since any articles, production residues, rejects and/or remainders from the polyurethane composition may be recycled again and re-used in the method according to the invention thereby reducing waste and improving the overall environmental footprint.

The present invention further relates to a polyurethane-based article prepared by the method according to the invention.

In principle any product, article or material prepared from polyurethane known in the prior art can be produced using to the method according to the present invention.

Accordingly, it is possible that the article prepared by the method according to the invention is a shoe, shoe sole, a padding material, a cushioning material, an insulation or structural panels, such as for example but not limited to marine sandwich constructions.

### EXAMPLES

### Composition

In the following compositions according to the invention are disclosed.

**Table 1: Compositions of the polyurethanes prepared in lab trials:**

| | Example (1a)/(1b) | Example (2a)/(2b) |
|---|---|---|
| | Semi rigid foam | Soft foam |
| Ratio (A)/(B) | 40/60 | |
| Component A | 40 mL PolyolaRec A 420 | 40 mL PolyolaRec A 160 |
| Component B | (1a) 60 mL Desmodur^{®} CQ 44 V 20L MB | (2a) 39 mL Elastopan^{®} S7529/182 137/29 |
| | (1b) 60 mL PolyolaRec B 420 | (2b) Desmodur^{®} CQ 44 V 20L MB |
| Blowing agent | 2 mL distilled water | 1 mL distilled water |

**Table 2: Compositions of the polyurethanes for preparation of articles:**

| | Example 3a | Example 3b |
|---|---|---|
| | Rigid foam | Rigid foam |
| Ratio (A)/(B) | **100/148** | **100/148** |
| Component (A) | PolyolaRec A 420 | PolyolaRec A 160 |
| Component (B) | PolyolaRec B 420 | Desmodur^{®} CQ 44 V 20L MB |
| Blowing agent | 2% distilled water | 2% distilled water |
| Stabilizer | 0.5 wt% of a polyoxyalkylene silicone | 0.5 wt% of a polyoxyalkylene silicone |
| Catalyst | 0.2 wt% triethylenamine | 0.2 wt% triethylenamine |

### Preparation examples:

### Polyurethanes according to table 1:

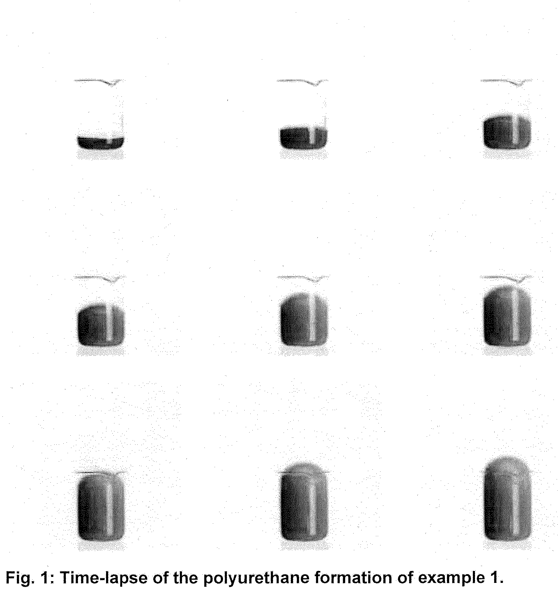

Example (1a)/(1b) and (2a)/(2b) as described in table 1 were prepared as follows: Component (A) was mixed with the distilled water in a first reaction vessel. Component (B) was provided to a second reaction vessel followed by the mixture comprising component (A) and the distilled water. After 10 s of stirring, the reaction started implied by the formation of CO₂ and thus, by the formation of the polyurethane foam (cf. Fig. 1).

### Polyurethane articles according to the compositions of table 2:

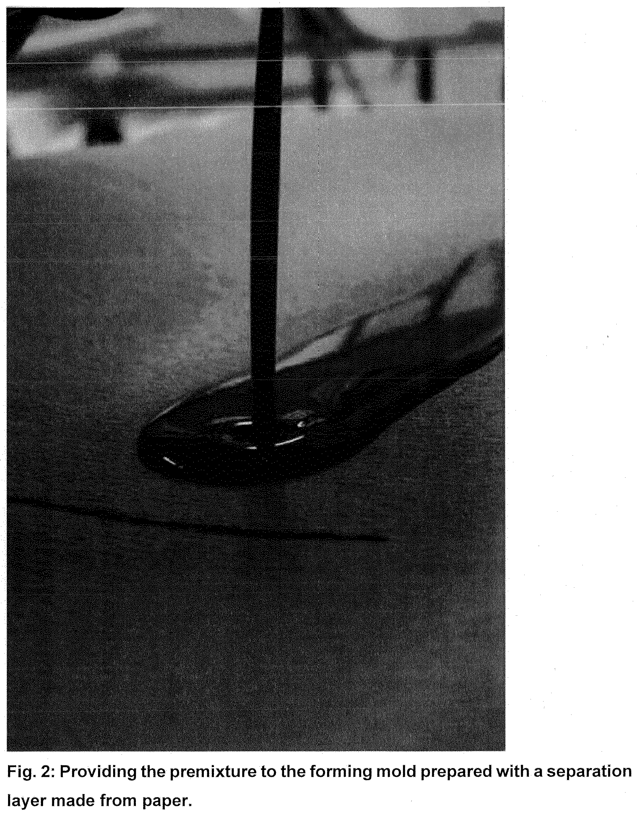

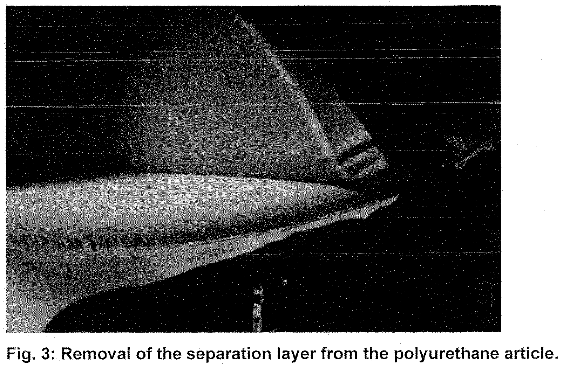

Component (A) and (B) are prepared in an intermediate bulk container (IBC) by pre-tempering both components to 12 °C. Further, distilled water, Silicone stabilizer and amine-based catalyst are added to component (A). In a pre-mixing vessel, components (A) and (B) are mixed using a stirrer at 1000 to 1800 rpm for 36 s to form a premixture. Said premixture is provided to forming mold (190 x 50 x 10 cm) being pre-tempered to 32 °C (Fig. 2), which is prepared with a thin separation layer made from krepp paper. After completing the provision of the premixture, the forming mold is closed and the mixture is allowed to react for 25 min. Afterwards, the polyurethane article is removed from the forming mold and the separation paper (Fig. 3) and placed for 24 h in a heating at 35 °C to finalize the reaction. A final polyurethane article is obtained which can be further processed, e.g. by cutting into a desired shape, if necessary.

## Claims

1. A polyurethan composition comprising at least components (A) and (B), wherein:
component (A) is at least one polyol composition comprising
component (A1) which is at least one first polyol;
component (A2) which is at least one second polyol; and
component (B) is at least one isocyanate;
wherein the at least one first polyol is a bio-based and/or recycling-based polyol.

2. Polyurethan composition according to claim 1, wherein component (A1) is obtained from recycled acidolyses polyurethan (PU) and/or recycled glycolysis polyethylene terephthalate (PET).

3. Polyurethan composition according to at least one of claims 1 or 2, wherein component (A) possesses an average OH-value in the range of from 10 mg KOH/g to 500 mg KOH/g.

4. Polyurethan composition according to at least one of claims 1 to 3, wherein component (A) comprises:
at least one first polyol (A1) in an amount of from 10 to 99 wt%;
at least one second polyol (A2) in an amount of from 1 to 90 wt%; and
wherein the weight percent are based on the total weight of component (A).

5. Polyurethan composition according to at least one of claims 1 to 4, wherein the polyurethan composition comprises component (A) in an amount of from 20 wt% to 70 wt% and component (B) in an amount of from 30 wt% to 80 wt%, wherein the weight percent are based on the total weight of the polyurethan composition.

6. Polyurethan composition according to at least one of claims 1 to 5, wherein component (B) comprises or consists of at least one bio-circular isocyanate.

7. Polyurethan composition according to at least one of claims 1 to 6, wherein the polyurethan composition further comprises one or more additives selected from the group consisting of stabilizers, catalysts, blowing agents, pigments, crosslinkers and chain extenders.

8. A method for preparing a polyurethan-based article, the method comprising:
(I) Providing at least one component (A) and at least one component (B) to a forming mold, thus forming a polyurethan composition as claimed in at least one of the preceding claims;
(II) Optionally closing the forming mold and optionally applying a pressure in the forming mold; and
(III) Expanding the polyurethan composition in the forming mold.

9. Method according to claim 8, wherein in step (III) an initiation temperature is applied via the forming mold; wherein said initiation temperature is below 45 °C.

10. Method according to at least one of claims 8 or 9, wherein the pressure applied is in the range of from 0 to 70 bar, preferably from 3 to 55 bar.

11. Method according to at least one of claims 8 to 10, wherein the cream time is in the range of from 2 to 30 s; and/or the demolding time is in the range of from 1 to 10 min.

12. Method according to at least one of claims 8 to 11, wherein articles, production residues, rejects and/or any remainders from the polyurethan system may be recycled and re-used in the method.

13. A polyurethan-based article comprising the polyurethan composition according to at least one of the claims 1 to 7 or prepared by the method according to at least one of claims 8 to 12.

14. Article according to claim 13, wherein the article is a shoe, shoe sole, a padding material, a cushioning material. an insulation or structural panels.
